# EUROPEAN PATENT SPECIFICATION

(11) **EP 2 941 840 B1**
(45) Date of publication and mention of the grant of the patent: **12.10.2016**
(21) Application number: 14702107.5
(22) Date of filing: 03.01.2014
(51) Int. Cl.: H04L 1/20, H04B 7/02, H04L 1/02, H04H 20/20

(54) **SELECTIVELY PATCHING ERASURES IN CIRCUIT-SWITCHED CALLS WHOSE FRAME ERASURE RATE RISES ABOVE A THRESHOLD BY ESTABLISHING AND SYNCHRONIZING A VOIP STREAM**
SELEKTIVE PATCHING-LÖSCHUNGEN IN LEITUNGSVERMITTELTEN VERBINDUNGEN MIT EINER RAHMENLÖSCHUNGSRATE ÜBER EINEM SCHWELLENWERT DURCH EINRICHTUNG UND SYNCHRONISIERUNG EINES VOIP-DATENSTROMS
RAPIÉÇAGE SÉLECTIF D'EFFACEMENTS D'APPELS À COMMUTATION DE CIRCUITS À VITESSE D'EFFACEMENT DE TRAME DÉPASSANT UN SEUIL PAR ÉTABLISSEMENT ET SYNCHRONISATION D'UN FLUX VOIP

(30) Priority: 03.01.2013 US 201361748486 P; 02.01.2014 US 201414146449
(43) Date of publication of application: 11.11.2015
(73) Proprietor: Qualcomm Incorporated, San Diego, CA 92121-1714 (US)
(72) Inventor: LINDNER, Mark, San Diego, California 92121-1714 (US)
(74) Representative: Tomkins & Co
(86) International application number: PCT/US2014/010234
(87) International publication number: WO 2014/107612

(56) References cited:
- WO-A1-2009/026475
- US-A- 5 592 471
- US-A- 5 940 444

## Description

### BACKGROUND

### Field of the Disclosure

The disclosure is directed to selectively patching erasures in circuit-switched calls whose frame erasure rate (FER) rises above a threshold by establishing and synchronizing a VoIP stream.

### Description of the Related Art

Circuit switching is a telecommunications network methodology in which two network nodes establish a dedicated communications channel (circuit) through the network before they may communicate with each other. The circuit guarantees the full bandwidth of the channel and remains connected for the duration of the call. The circuit functions as if the nodes were physically connected as with an electrical circuit.

Circuit switching is commonly used for connecting voice circuits. During a circuit-switched (CS) call, a certain percentage of frames may be dropped or lost (called "frame erasure"). Carriers may intentionally drop approximately 1% or less of the frames to reduce the amount of power necessary to transmit the call. Frames may also be lost due to interference. A low frame erasure rate (FER), e.g. 1% or less, during a CS call is typically not noticeable. A higher FER, such as 5-10%, however, is noticeable. Carriers typically increase the power of the transmission to compensate for the higher FER, however, this is not always effective. Alternatively, the carrier may insert some redundancy into the frame stream itself, but this is also not entirely effective. US5592471A discloses mobile radio receivers in a broadcasting system having more than one transmission channel sending the same programs use time diversity to prevent service outages during periods when none of the channels can be received. WO2009/026475A1 discloses an apparatus to deliver video over an Internet Protocol ('IP') network using multicast distribution and unicast correction. The apparatus includes a video receiver module, a multicast module, and a correction signal module. The video receiver module receives one or more videos formatted as IP packets at a first server. The multicast module streams the one or more videos to a user device over a first IP network using a multicast after a time delay. The correction signal module streams the one or more videos to a second server over a second IP network. The second server transmits requested IP packets of a video stream to the user device over a third IP network. The requested IP packets requested by the user device replace missing IP packets from the video stream. US5940444A discloses a digital audio radio system that employs transmitting multiple time-separated versions or legs of the same or substantially the same source signal to accommodate signal blockage problems while using no or little additional bit data rate. In one embodiment, a first leg transmits only right channel data and a second leg transmits only left channel data when no blockage occurs, the two legs can be combined to provide a complete signal and perfect reception. If one of the legs is blocked, then a cloning technique is used to clone the existing channel as the non-existing channel to provide either a combination of two right channels or two left channels. In another embodiment, a first leg transmits a sequence of the even frames including both right and left channel data and leaves the odd frames blank, and a second leg transmits a sequence of the odd frames including both the right and left channel data and leaves the even frames blank. The combination of the two legs will provide perfect reception where no blockage occurs. If the signal is blocked, the existing frames can be repeated or interpolated to provide the non-existing frames. In another embodiment, a plurality of transmitted legs include blank frames and only right or left channel data in non-blank frames. The combination of all of the legs provides all of the digital data for perfect reception. If one or more of the legs is blocked, in the right and left channel cloning, frame repeating or interpolation can be used to replace the missing data in each frame.

### SUMMARY

The disclosure is related to selectively patching frame erasures in a first stream. A method for selectively patching frame erasures in a first stream includes receiving the first stream, receiving a second stream corresponding to the first stream, detecting a missing frame in the first stream, and attempting to replace the missing frame in the first stream with a corresponding frame from the second stream.

An apparatus for selectively patching frame erasures in a first stream includes means for receiving the first stream, means for receiving a second stream corresponding to the first stream, means for detecting a missing frame in the first stream, and means for attempting to replace the missing frame in the first stream with a corresponding frame from the second stream.

A non-transitory computer-readable medium for selectively patching frame erasures in a first stream includes at least one instruction to receive the first stream, at least one instruction to receive a second stream corresponding to the first stream, at least one instruction to detect a missing frame in the first stream, and at least one instruction to attempt to replace the missing frame in the first stream with a corresponding frame from the second stream.

### BRIEF DESCRIPTION OF THE DRAWINGS

A more complete appreciation of embodiments of the invention and many of the attendant advantages thereof will be readily obtained as the same becomes better understood by reference to the following detailed description when considered in connection with the accompanying drawings which are presented solely for illustration and not limitation of the invention, and in which:
FIG. 1 illustrates a high-level system architecture of a wireless communications system in accordance with an embodiment of the invention.
FIG. 2A illustrates an example configuration of a radio access network (RAN) and a packet-switched portion of a core network for a 1x EV-DO network in accordance with an embodiment of the invention.
FIG. 2B illustrates an example configuration of the RAN and a packet-switched portion of a General Packet Radio Service (GPRS) core network within a 3G UMTS W-CDMA system in accordance with an embodiment of the invention.
FIG. 2C illustrates another example configuration of the RAN and a packet-switched portion of a GPRS core network within a 3G UMTS W-CDMA system in accordance with an embodiment of the invention.
FIG. 2D illustrates an example configuration of the RAN and a packet-switched portion of the core network that is based on an Evolved Packet System (EPS) or Long Term Evolution (LTE) network in accordance with an embodiment of the invention.
FIG. 2E illustrates an example configuration of an enhanced High Rate Packet Data (HRPD) RAN connected to an EPS or LTE network and also a packet-switched portion of an HRPD core network in accordance with an embodiment of the invention.
FIG. 3 illustrates examples of user equipments (UEs) in accordance with embodiments of the invention.
FIG. 4 illustrates a communication device that includes logic configured to perform functionality in accordance with an embodiment of the invention.
FIG. 5 illustrates an exemplary network according to an embodiment.
FIG. 6 illustrates an exemplary flow for selectively patching frame erasures in a first stream.
FIG. 7 illustrates an exemplary flow for selectively patching frame erasures in a first stream.
FIG. 8 illustrates an example apparatus for users during a server failure, represented as a series of interrelated functional modules.

### DETAILED DESCRIPTION

Aspects of the disclosure are disclosed in the following description and related drawings. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage, or mode of operation.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

A client device, referred to herein as a user equipment (UE), may be mobile or stationary, and may communicate with a radio access network (RAN). As used herein, the term "UE" may be referred to interchangeably as an "access terminal" or "AT," a "wireless device," a "subscriber device," a "subscriber terminal," a "subscriber station," a "user terminal" or UT, a "mobile terminal," a "mobile station" and variations thereof. Generally, UEs can communicate with a core network via the RAN, and through the core network the UEs can be connected with external networks such as the Internet. Of course, other mechanisms of connecting to the core network and/or the Internet are also possible for the UEs, such as over wired access networks, WiFi networks (e.g., based on IEEE 802.11, etc.) and so on. UEs can be embodied by any of a number of types of devices including but not limited to PC cards, compact flash devices, external or internal modems, wireless or wireline phones, and so on. A communication link through which UEs can send signals to the RAN is called an uplink channel (e.g., a reverse traffic channel, a reverse control channel, an access channel, etc.). A communication link through which the RAN can send signals to UEs is called a downlink or forward link channel (e.g., a paging channel, a control channel, a broadcast channel, a forward traffic channel, etc.). As used herein the term traffic channel (TCH) can refer to either an uplink / reverse or downlink / forward traffic channel.

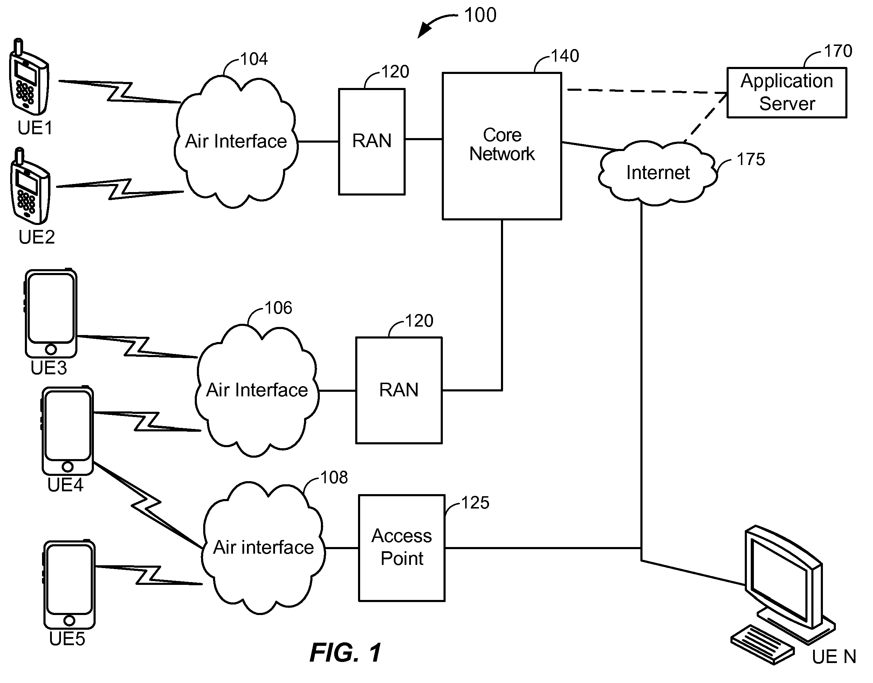

FIG. 1 illustrates a high-level system architecture of a wireless communications system 100 in accordance with an embodiment of the invention. The wireless communications system 100 contains UEs 1...N. The UEs 1...N can include cellular telephones, personal digital assistant (PDAs), pagers, a laptop computer, a desktop computer, and so on. For example, in FIG. 1, UEs 1...2 are illustrated as cellular calling phones, UEs 3...5 are illustrated as cellular touchscreen phones or smart phones, and UE N is illustrated as a desktop computer or PC.

Referring to FIG. 1, UEs 1...N are configured to communicate with an access network (e.g., the RAN 120, an access point 125, etc.) over a physical communications interface or layer, shown in FIG. 1 as air interfaces 104, 106, 108 and/or a direct wired connection. The air interfaces 104 and 106 can comply with a given cellular communications protocol (e.g., Code Division Multiple Access (CDMA), Evolution-Data Optimized (EV-DO), Enhanced High Rate Packet Data (eHRPD), Global System of Mobile Communication (GSM), Enhanced Data Rates for GSM Evolution (EDGE), Wideband CDMA (W-CDMA), Long-Term Evolution (LTE), etc.), while the air interface 108 can comply with a wireless Internet protocol (IP) (e.g., IEEE 802.11). The RAN 120 includes a plurality of access points that serve UEs over air interfaces, such as the air interfaces 104 and 106. The access points in the RAN 120 can be referred to as access nodes or ANs, access points or APs, base stations or BSs, Node Bs, eNode Bs, and so on. These access points can be terrestrial access points (or ground stations), or satellite access points. The RAN 120 is configured to connect to a core network 140 that can perform a variety of functions, including bridging circuit switched (CS) calls between UEs served by the RAN 120 and other UEs served by the RAN 120 or a different RAN altogether, and can also mediate an exchange of packet-switched (PS) data with external networks such as Internet 175. The Internet 175 includes a number of routing agents and processing agents (not shown in FIG. 1 for the sake of convenience). In FIG. 1, UE N is shown as connecting to the Internet 175 directly (i.e., separate from the core network 140, such as over an Ethernet connection of WiFi or 802.11-based network). The Internet 175 can thereby function to bridge packet-switched data communications between UE N and UEs 1...N via the core network 140. Also shown in FIG.1 is the access point 125 that is separate from the RAN 120. The access point 125 may be connected to the Internet 175 independent of the core network 140 (e.g., via an optical communication system such as FiOS, a cable modem, etc.). The air interface 108 may serve UE 4 or UE 5 over a local wireless connection, such as IEEE 802.11 in an example. UE N is shown as a desktop computer with a wired connection to the Internet 175, such as a direct connection to a modem or router, which can correspond to the access point 125 itself in an example (e.g., for a WiFi router with both wired and wireless connectivity).

Referring to FIG. 1, an application server 170 is shown as connected to the Internet 175, the core network 140, or both. The application server 170 can be implemented as a plurality of structurally separate servers, or alternately may correspond to a single server. As will be described below in more detail, the application server 170 is configured to support one or more communication services (e.g., Voice-over-Internet Protocol (VoIP) sessions, Push-to-Talk (PTT) sessions, group communication sessions, social networking services, etc.) for UEs that can connect to the application server 170 via the core network 140 and/or the Internet 175.

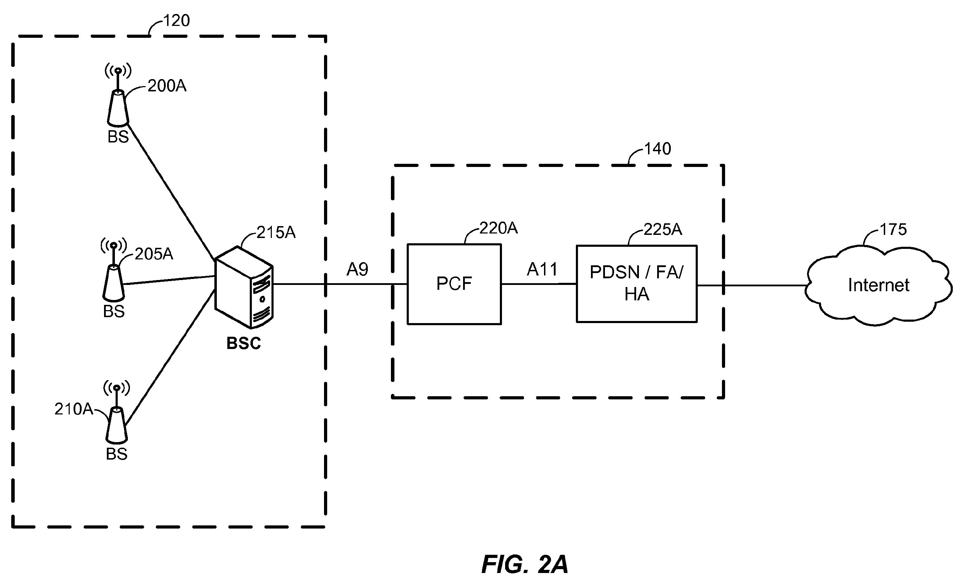

Examples of protocol-specific implementations for the RAN 120 and the core network 140 are provided below with respect to FIGS. 2A through 2D to help explain the wireless communications system 100 in more detail. In particular, the components of the RAN 120 and the core network 140 corresponds to components associated with supporting packet-switched (PS) communications, whereby legacy circuit-switched (CS) components may also be present in these networks, but any legacy CS-specific components are not shown explicitly in FIGS. 2A-2D.

FIG. 2A illustrates an example configuration of the RAN 120 and the core network 140 for packet-switched communications in a CDMA2000 1x Evolution-Data Optimized (EV-DO) network in accordance with an embodiment of the invention. Referring to FIG. 2A, the RAN 120 includes a plurality of base stations (BSs) 200A, 205A and 210A that are coupled to a base station controller (BSC) 215A over a wired backhaul interface. A group of BSs controlled by a single BSC is collectively referred to as a subnet. As will be appreciated by one of ordinary skill in the art, the RAN 120 can include multiple BSCs and subnets, and a single BSC is shown in FIG. 2A for the sake of convenience. The BSC 215A communicates with a packet control function (PCF) 220A within the core network 140 over an A9 connection. The PCF 220A performs certain processing functions for the BSC 215A related to packet data. The PCF 220A communicates with a Packet Data Serving Node (PDSN) 225A within the core network 140 over an A11 connection. The PDSN 225A has a variety of functions, including managing Point-to-Point (PPP) sessions, acting as a home agent (HA) and/or foreign agent (FA), and is similar in function to a Gateway General Packet Radio Service (GPRS) Support Node (GGSN) in GSM and UMTS networks (described below in more detail). The PDSN 225A connects the core network 140 to external IP networks, such as the Internet 175.

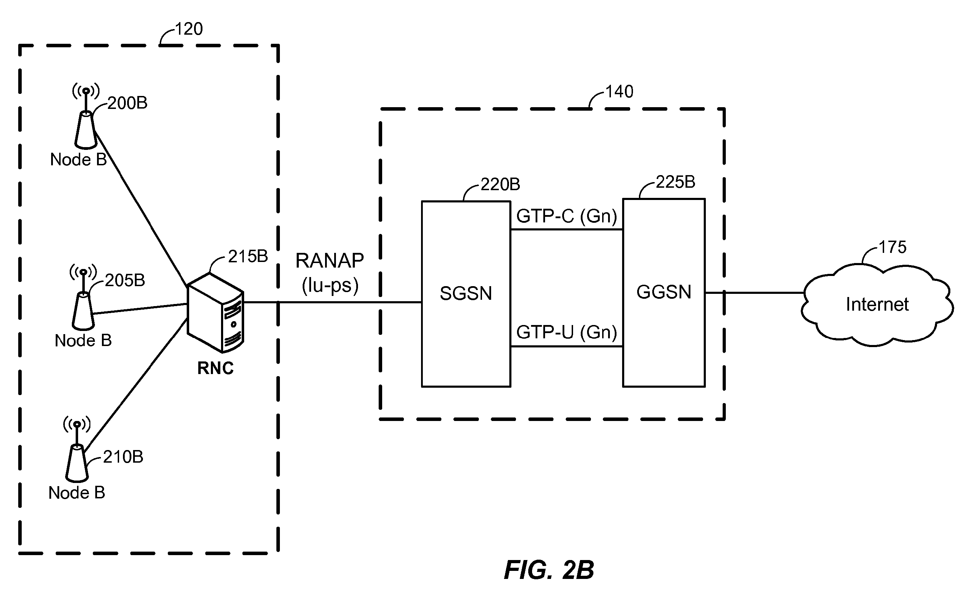

FIG. 2B illustrates an example configuration of the RAN 120 and a packet-switched portion of the core network 140 that is configured as a GPRS core network within a 3G UMTS W-CDMA system in accordance with an embodiment of the invention. Referring to FIG. 2B, the RAN 120 includes a plurality of Node Bs 200B, 205B and 210B that are coupled to a Radio Network Controller (RNC) 215B over a wired backhaul interface. Similar to 1x EV-DO networks, a group of Node Bs controlled by a single RNC is collectively referred to as a subnet. As will be appreciated by one of ordinary skill in the art, the RAN 120 can include multiple RNCs and subnets, and a single RNC is shown in FIG. 2B for the sake of convenience. The RNC 215B is responsible for signaling, establishing and tearing down bearer channels (i.e., data channels) between a Serving GRPS Support Node (SGSN) 220B in the core network 140 and UEs served by the RAN 120. If link layer encryption is enabled, the RNC 215B also encrypts the content before forwarding it to the RAN 120 for transmission over an air interface. The function of the RNC 215B is well-known in the art and will not be discussed further for the sake of brevity.

In FIG. 2B, the core network 140 includes the above-noted SGSN 220B (and potentially a number of other SGSNs as well) and a GGSN 225B. Generally, GPRS is a protocol used in GSM for routing IP packets. The GPRS core network (e.g., the GGSN 225B and one or more SGSNs 220B) is the centralized part of the GPRS system and also provides support for W-CDMA based 3G access networks. The GPRS core network is an integrated part of the GSM core network (i.e., the core network 140) that provides mobility management, session management and transport for IP packet services in GSM and W-CDMA networks.

The GPRS Tunneling Protocol (GTP) is the defining IP protocol of the GPRS core network. The GTP is the protocol which allows end users (e.g., UEs) of a GSM or W-CDMA network to move from place to place while continuing to connect to the Internet 175 as if from one location at the GGSN 225B. This is achieved by transferring the respective UE's data from the UE's current SGSN 220B to the GGSN 225B, which is handling the respective UE's session.

Three forms of GTP are used by the GPRS core network; namely, (i) GTP-U, (ii) GTP-C and (iii) GTP' (GTP Prime). GTP-U is used for transfer of user data in separated tunnels for each packet data protocol (PDP) context. GTP-C is used for control signaling (e.g., setup and deletion of PDP contexts, verification of GSN reach-ability, updates or modifications such as when a subscriber moves from one SGSN to another, etc.). GTP' is used for transfer of charging data from GSNs to a charging function.

Referring to FIG. 2B, the GGSN 225B acts as an interface between a GPRS backbone network (not shown) and the Internet 175. The GGSN 225B extracts packet data with associated a packet data protocol (PDP) format (e.g., IP or PPP) from GPRS packets coming from the SGSN 220B, and sends the packets out on a corresponding packet data network. In the other direction, the incoming data packets are directed by the GGSN connected UE to the SGSN 220B which manages and controls the Radio Access Bearer (RAB) of a target UE served by the RAN 120. Thereby, the GGSN 225B stores the current SGSN address of the target UE and its associated profile in a location register (e.g., within a PDP context). The GGSN 225B is responsible for IP address assignment and is the default router for a connected UE. The GGSN 225B also performs authentication and charging functions.

The SGSN 220B is representative of one of many SGSNs within the core network 140, in an example. Each SGSN is responsible for the delivery of data packets from and to the UEs within an associated geographical service area. The tasks of the SGSN 220B includes packet routing and transfer, mobility management (e.g., attach/detach and location management), logical link management, and authentication and charging functions. The location register of the SGSN 220B stores location information (e.g., current cell, current VLR) and user profiles (e.g., IMSI, PDP address(es) used in the packet data network) of all GPRS users registered with the SGSN 220B, for example, within one or more PDP contexts for each user or UE. Thus, SGSNs 220B are responsible for (i) de-tunneling downlink GTP packets from the GGSN 225B, (ii) uplink tunnel IP packets toward the GGSN 225B, (iii) carrying out mobility management as UEs move between SGSN service areas and (iv) billing mobile subscribers. As will be appreciated by one of ordinary skill in the art, aside from (i) - (iv), SGSNs configured for GSM/EDGE networks have slightly different functionality as compared to SGSNs configured for W-CDMA networks.

The RAN 120 (e.g., or UTRAN, in UMTS system architecture) communicates with the SGSN 220B via a Radio Access Network Application Part (RANAP) protocol. RANAP operates over an Iu interface (Iu-ps), with a transmission protocol such as Frame Relay or IP. The SGSN 220B communicates with the GGSN 225B via a Gn interface, which is an IP-based interface between SGSN 220B and other SGSNs (not shown) and internal GGSNs (not shown), and uses the GTP protocol defined above (e.g., GTP-U, GTP-C, GTP', etc.). In the embodiment of FIG. 2B, the Gn between the SGSN 220B and the GGSN 225B carries both the GTP-C and the GTP-U. While not shown in FIG. 2B, the Gn interface is also used by the Domain Name System (DNS). The GGSN 225B is connected to a Public Data Network (PDN) (not shown), and in turn to the Internet 175, via a Gi interface with IP protocols either directly or through a Wireless Application Protocol (WAP) gateway.

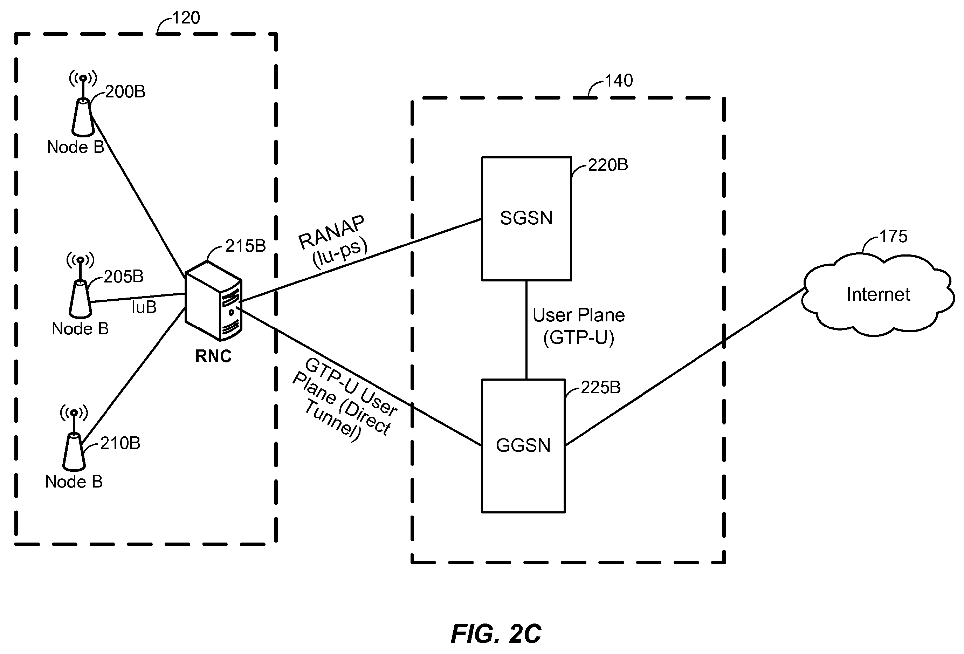

FIG. 2C illustrates another example configuration of the RAN 120 and a packet-switched portion of the core network 140 that is configured as a GPRS core network within a 3G UMTS W-CDMA system in accordance with an embodiment of the invention. Similar to FIG. 2B, the core network 140 includes the SGSN 220B and the GGSN 225B. However, in FIG. 2C, Direct Tunnel is an optional function in Iu mode that allows the SGSN 220B to establish a direct user plane tunnel, GTP-U, between the RAN 120 and the GGSN 225B within a PS domain. A Direct Tunnel capable SGSN, such as SGSN 220B in FIG. 2C, can be configured on a per GGSN and per RNC basis whether or not the SGSN 220B can use a direct user plane connection. The SGSN 220B in FIG. 2C handles the control plane signaling and makes the decision of when to establish Direct Tunnel. When the RAB assigned for a PDP context is released (i.e. the PDP context is preserved) the GTP-U tunnel is established between the GGSN 225B and SGSN 220B in order to be able to handle the downlink packets.

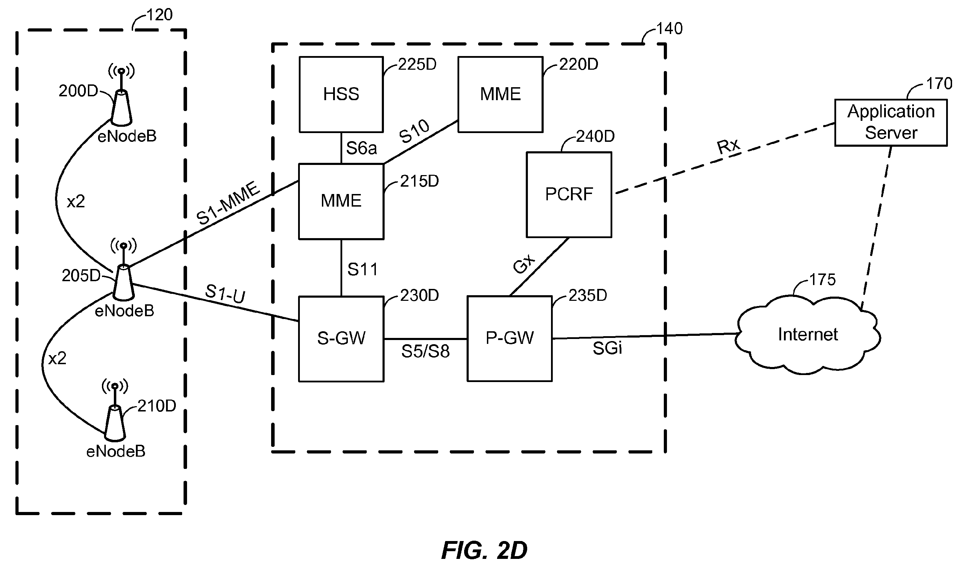

FIG. 2D illustrates an example configuration of the RAN 120 and a packet-switched portion of the core network 140 based on an Evolved Packet System (EPS) or LTE network, in accordance with an embodiment of the invention. Referring to FIG. 2D, unlike the RAN 120 shown in FIGS. 2B-2C, the RAN 120 in the EPS / LTE network is configured with a plurality of Evolved Node Bs (ENodeBs or eNBs) 200D, 205D and 210D, without the RNC 215B from FIGS. 2B-2C. This is because ENodeBs in EPS / LTE networks do not require a separate controller (i.e., the RNC 215B) within the RAN 120 to communicate with the core network 140. In other words, some of the functionality of the RNC 215B from FIGS. 2B-2C is built into each respective eNodeB of the RAN 120 in FIG. 2D.

In FIG. 2D, the core network 140 includes a plurality of Mobility Management Entities (MMEs) 215D and 220D, a Home Subscriber Server (HSS) 225D, a Serving Gateway (S-GW) 230D, a Packet Data Network Gateway (P-GW) 235D and a Policy and Charging Rules Function (PCRF) 240D. Network interfaces between these components, the RAN 120 and the Internet 175 are illustrated in FIG. 2D and are defined in Table 1 (below) as follows:

**Table 1 - EPS / LTE Core Network Connection Definitions**

| Network Interface | Description |
|---|---|
| S1-MME | Reference point for the control plane protocol between RAN 120 and MME 215D. |
| S1-U | Reference point between RAN 120 and S-GW 230D for the per bearer user plane tunneling and inter-eNodeB path switching during handover. |
| S5 | Provides user plane tunneling and tunnel management between S-GW 230D and P-GW 235D. It is used for S-GW relocation due to UE mobility and if the S-GW 230D needs to connect to a non-collocated P-GW for the required PDN connectivity. |
| S6a | Enables transfer of subscription and authentication data for authenticating/authorizing user access to the evolved system |
| | (Authentication, Authorization, and Accounting [AAA] interface) between MME 215D and HSS 225D. |
| Gx | Provides transfer of Quality of Service (QoS) policy and charging rules from PCRF 240D to Policy a Charging Enforcement Function (PCEF) component (not shown) in the P-GW 235D. |
| S8 | Inter-PLMN reference point providing user and control plane between the S-GW 230D in a Visited Public Land Mobile Network (VPLMN) and the P-GW 235D in a Home Public Land Mobile Network (HPLMN). S8 is the inter-PLMN variant of S5. |
| S10 | Reference point between MMEs 215D and 220D for MME relocation and MME to MME information transfer. |
| S11 | Reference point between MME 215D and S-GW 230D. |
| SGi | Reference point between the P-GW 235D and the packet data network, shown in FIG. 2D as the Internet 175. The Packet data network may be an operator external public or private packet data network or an intra-operator packet data network (e.g., for provision of IMS services). This reference point corresponds to Gi for 3GPP accesses. |
| X2 | Reference point between two different eNodeBs used for UE handoffs. |
| Rx | Reference point between the PCRF 240D and an application function (AF) that is used to exchanged application-level session information, where the AF is represented in FIG. 1 by the application server 170. |

A high-level description of the components shown in the RAN 120 and core network 140 of FIG. 2D will now be described. However, these components are each well-known in the art from various 3GPP TS standards, and the description contained herein is not intended to be an exhaustive description of all functionalities performed by these components.

Referring to FIG. 2D, the MMEs 215D and 220D are configured to manage the control plane signaling for the EPS bearers. MME functions include: Non-Access Stratum (NAS) signaling, NAS signaling security, Mobility management for inter- and intra-technology handovers, P-GW and S-GW selection, and MME selection for handovers with MME change.

Referring to FIG. 2D, the S-GW 230D is the gateway that terminates the interface toward the RAN 120. For each UE associated with the core network 140 for an EPS-based system, at a given point of time, there is a single S-GW. The functions of the S-GW 230D, for both the GTP-based and the Proxy Mobile IPv6 (PMIP)-based S5/S8, include: Mobility anchor point, Packet routing and forwarding, and setting the DiffServ Code Point (DSCP) based on a QoS Class Identifier (QCI) of the associated EPS bearer.

Referring to FIG. 2D, the P-GW 235D is the gateway that terminates the SGi interface toward the Packet Data Network (PDN), e.g., the Internet 175. If a UE is accessing multiple PDNs, there may be more than one P-GW for that UE; however, a mix of S5/S8 connectivity and Gn/Gp connectivity is not typically supported for that UE simultaneously. P-GW functions include for both the GTP-based S5/S8: Packet filtering (by deep packet inspection), UE IP address allocation, setting the DSCP based on the QCI of the associated EPS bearer, accounting for inter operator charging, uplink (UL) and downlink (DL) bearer binding as defined in 3GPP TS 23.203, UL bearer binding verification as defined in 3GPP TS 23.203. The P-GW 235D provides PDN connectivity to both GSM/EDGE Radio Access Network (GERAN)/UTRAN only UEs and E-UTRAN-capable UEs using any of E-UTRAN, GERAN, or UTRAN. The P-GW 235D provides PDN connectivity to E-UTRAN capable UEs using E-UTRAN only over the S5/S8 interface.

Referring to FIG. 2D, the PCRF 240D is the policy and charging control element of the EPS-based core network 140. In a non-roaming scenario, there is a single PCRF in the HPLMN associated with a UE's Internet Protocol Connectivity Access Network (IP-CAN) session. The PCRF terminates the Rx interface and the Gx interface. In a roaming scenario with local breakout of traffic, there may be two PCRFs associated with a UE's IP-CAN session: A Home PCRF (H-PCRF) is a PCRF that resides within a HPLMN, and a Visited PCRF (V-PCRF) is a PCRF that resides within a visited VPLMN. PCRF is described in more detail in 3GPP TS 23.203, and as such will not be described further for the sake of brevity. In FIG. 2D, the application server 170 (e.g., which can be referred to as the AF in 3GPP terminology) is shown as connected to the core network 140 via the Internet 175, or alternatively to the PCRF 240D directly via an Rx interface. Generally, the application server 170 (or AF) is an element offering applications that use IP bearer resources with the core network (e.g. UMTS PS domain/GPRS domain resources/LTE PS data services). One example of an application function is the Proxy-Call Session Control Function (P-CSCF) of the IP Multimedia Subsystem (IMS) Core Network sub system. The AF uses the Rx reference point to provide session information to the PCRF 240D. Any other application server offering IP data services over cellular network can also be connected to the PCRF 240D via the Rx reference point.

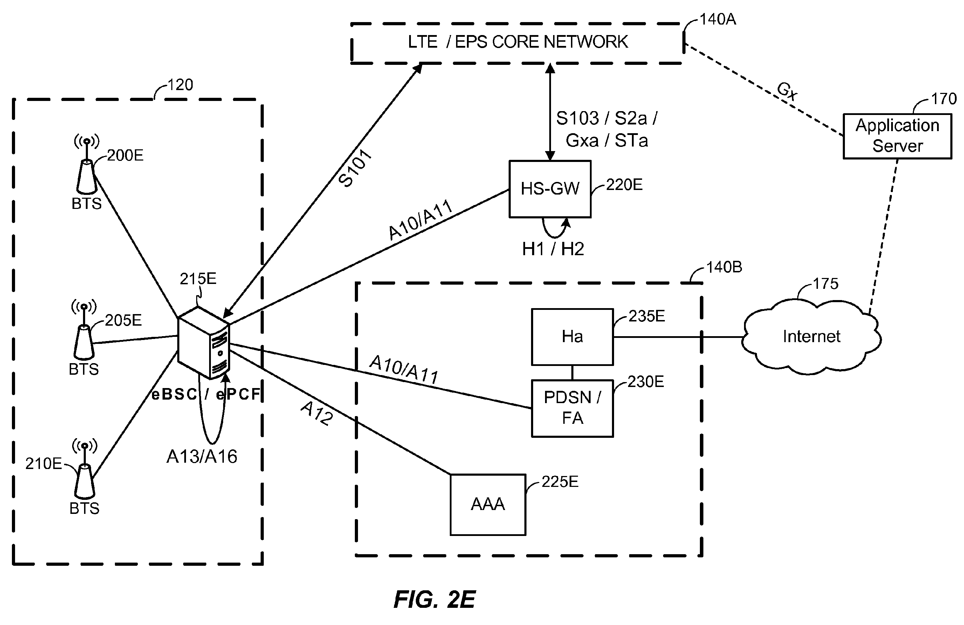

FIG. 2E illustrates an example of the RAN 120 configured as an enhanced High Rate Packet Data (HRPD) RAN connected to an EPS or LTE network 140A and also a packet-switched portion of an HRPD core network 140B in accordance with an embodiment of the invention. The core network 140A is an EPS or LTE core network, similar to the core network described above with respect to FIG. 2D.

In FIG. 2E, the eHRPD RAN includes a plurality of base transceiver stations (BTSs) 200E, 205E and 210E, which are connected to an enhanced BSC (eBSC) and enhanced PCF (ePCF) 215E. The eBSC/ePCF 215E can connect to one of the MMEs 215D or 220D within the EPS core network 140A over an S101 interface, and to an HRPD serving gateway (HSGW) 220E over A10 and/or A11 interfaces for interfacing with other entities in the EPS core network 140A (e.g., the S-GW 230D over an S103 interface, the P-GW 235D over an S2a interface, the PCRF 240D over a Gxa interface, a 3GPP AAA server (not shown explicitly in FIG. 2D) over an STa interface, etc.). The HSGW 220E is defined in 3GPP2 to provide the interworking between HRPD networks and EPS / LTE networks. As will be appreciated, the eHRPD RAN and the HSGW 220E are configured with interface functionality to EPC / LTE networks that is not available in legacy HRPD networks.

Turning back to the eHRPD RAN, in addition to interfacing with the EPS / LTE network 140A, the eHRPD RAN can also interface with legacy HRPD networks such as HRPD network 140B. As will be appreciated the HRPD network 140B is an example implementation of a legacy HRPD network, such as the EV-DO network from FIG. 2A. For example, the eBSC/ePCF 215E can interface with an authentication, authorization and accounting (AAA) server 225E via an A12 interface, or to a PDSN / FA 230E via an A10 or A11 interface. The PDSN / FA 230E in turn connects to HA 235A, through which the Internet 175 can be accessed. In FIG. 2E, certain interfaces (e.g., A13, A16, H1, H2, etc.) are not described explicitly but are shown for completeness and would be understood by one of ordinary skill in the art familiar with HRPD or eHRPD.

Referring to FIGS. 2B-2E, it will be appreciated that LTE core networks (e.g., FIG. 2D) and HRPD core networks that interface with eHRPD RANs and HSGWs (e.g., FIG. 2E) can support network-initiated Quality of Service (QoS) (e.g., by the P-GW, GGSN, SGSN, etc.) in certain cases.

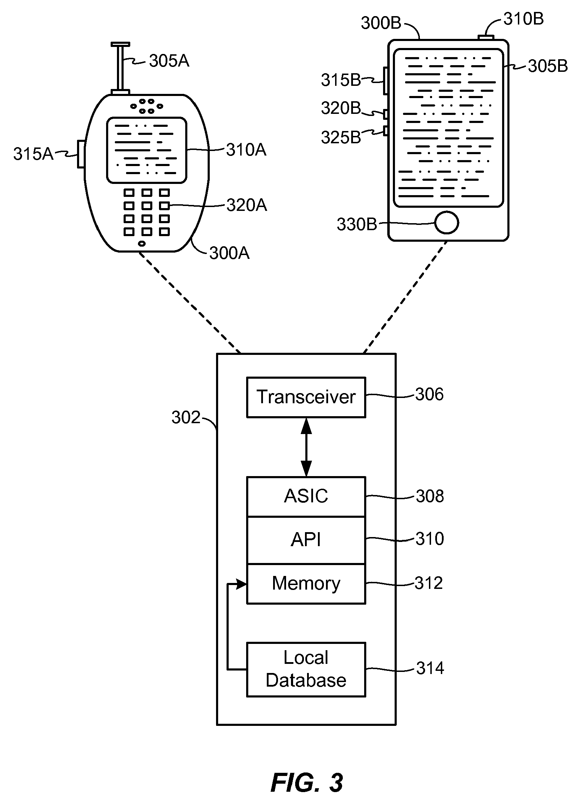

FIG. 3 illustrates examples of UEs in accordance with embodiments of the invention. Referring to FIG. 3, UE 300A is illustrated as a calling telephone and UE 300B is illustrated as a touchscreen device (e.g., a smart phone, a tablet computer, etc.). As shown in FIG. 3, an external casing of UE 300A is configured with an antenna 305A, display 310A, at least one button 315A (e.g., a PTT button, a power button, a volume control button, etc.) and a keypad 320A among other components, as is known in the art. Also, an external casing of UE 300B is configured with a touchscreen display 305B, peripheral buttons 310B, 315B, 320B and 325B (e.g., a power control button, a volume or vibrate control button, an airplane mode toggle button, etc.), at least one front-panel button 330B (e.g., a Home button, etc.), among other components, as is known in the art. While not shown explicitly as part of UE 300B, the UE 300B can include one or more external antennas and/or one or more integrated antennas that are built into the external casing of UE 300B, including but not limited to WiFi antennas, cellular antennas, satellite position system (SPS) antennas (e.g., global positioning system (GPS) antennas), and so on.

While internal components of UEs such as the UEs 300A and 300B can be embodied with different hardware configurations, a basic high-level UE configuration for internal hardware components is shown as platform 302 in FIG. 3. The platform 302 can receive and execute software applications, data and/or commands transmitted from the RAN 120 that may ultimately come from the core network 140, the Internet 175 and/or other remote servers and networks (e.g., application server 170, web URLs, etc.). The platform 302 can also independently execute locally stored applications without RAN interaction. The platform 302 can include a transceiver 306 operably coupled to an application specific integrated circuit (ASIC) 308, or other processor, microprocessor, logic circuit, or other data processing device. The ASIC 308 or other processor executes the application programming interface (API) 310 layer that interfaces with any resident programs in the memory 312 of the wireless device. The memory 312 can be comprised of read-only memory (ROM), random-access memory (RAM), electrically erasable programmable ROM (EEPROM), flash cards, or any memory common to computer platforms. The platform 302 also can include a local database 314 that can store applications not actively used in memory 312, as well as other data. The local database 314 is typically a flash memory cell, but can be any secondary storage device as known in the art, such as magnetic media, EEPROM, optical media, tape, soft or hard disk, or the like.

Accordingly, an embodiment of the invention can include a UE (e.g., UE 300A, 300B, etc.) including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 308, memory 312, API 310 and local database 314 may all be used cooperatively to load, store and execute the various functions disclosed herein and thus the logic to perform these functions may be distributed over various elements. Alternatively, the functionality could be incorporated into one discrete component. Therefore, the features of the UEs 300A and 300B in FIG. 3 are to be considered merely illustrative and the invention is not limited to the illustrated features or arrangement.

The wireless communication between the UEs 300A and/or 300B and the RAN 120 can be based on different technologies, such as CDMA, W-CDMA, time division multiple access (TDMA), frequency division multiple access (FDMA), Orthogonal Frequency Division Multiplexing (OFDM), GSM, or other protocols that may be used in a wireless communications network or a data communications network. As discussed in the foregoing and known in the art, voice transmission and/or data can be transmitted to the UEs from the RAN using a variety of networks and configurations. Accordingly, the illustrations provided herein are not intended to limit the embodiments of the invention and are merely to aid in the description of aspects of embodiments of the invention.

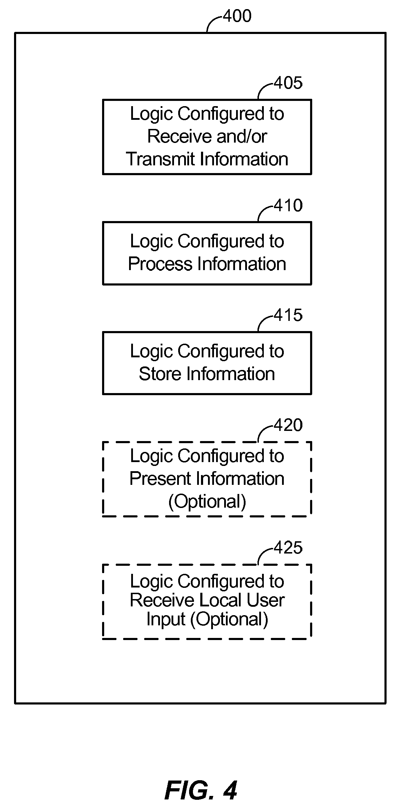

FIG. 4 illustrates a communication device 400 that includes logic configured to perform functionality. The communication device 400 can correspond to any of the above-noted communication devices, including but not limited to UEs 300A or 300B, any component of the RAN 120 (e.g., BSs 200A through 210A, BSC 215A, Node Bs 200B through 210B, RNC 215B, eNodeBs 200D through 210D, etc.), any component of the core network 140 (e.g., PCF 220A, PDSN 225A, SGSN 220B, GGSN 225B, MME 215D or 220D, HSS 225D, S-GW 230D, P-GW 235D, PCRF 240D), any components coupled with the core network 140 and/or the Internet 175 (e.g., the application server 170), and so on. Thus, communication device 400 can correspond to any electronic device that is configured to communicate with (or facilitate communication with) one or more other entities over the wireless communications system 100 of FIG. 1.

Referring to FIG. 4, the communication device 400 includes logic configured to receive and/or transmit information 405. In an example, if the communication device 400 corresponds to a wireless communications device (e.g., UE 300A or 300B, one of BSs 200A through 210A, one of Node Bs 200B through 210B, one of eNodeBs 200D through 210D, etc.), the logic configured to receive and/or transmit information 405 can include a wireless communications interface (e.g., Bluetooth, WiFi, 2G, CDMA, W-CDMA, 3G, 4G, LTE, etc.) such as a wireless transceiver and associated hardware (e.g., an RF antenna, a MODEM, a modulator and/or demodulator, etc.). In another example, the logic configured to receive and/or transmit information 405 can correspond to a wired communications interface (e.g., a serial connection, a USB or Firewire connection, an Ethernet connection through which the Internet 175 can be accessed, etc.). Thus, if the communication device 400 corresponds to some type of network-based server (e.g., PDSN, SGSN, GGSN, S-GW, P-GW, MME, HSS, PCRF, the application server 170, etc.), the logic configured to receive and/or transmit information 405 can correspond to an Ethernet card, in an example, that connects the network-based server to other communication entities via an Ethernet protocol. As an example, the logic configured to receive and/or transmit information 405 may include logic configured to receive a first stream and logic configured to receive a second stream corresponding to the first stream. In a further example, the logic configured to receive and/or transmit information 405 can include sensory or measurement hardware by which the communication device 400 can monitor its local environment (e.g., an accelerometer, a temperature sensor, a light sensor, an antenna for monitoring local RF signals, etc.). The logic configured to receive and/or transmit information 405 can also include software that, when executed, permits the associated hardware of the logic configured to receive and/or transmit information 405 to perform its reception and/or transmission function(s). However, the logic configured to receive and/or transmit information 405 does not correspond to software alone, and the logic configured to receive and/or transmit information 405 relies at least in part upon hardware to achieve its functionality.

Referring to FIG. 4, the communication device 400 further includes logic configured to process information 410. In an example, the logic configured to process information 410 can include at least a processor. Example implementations of the type of processing that can be performed by the logic configured to process information 410 includes but is not limited to performing determinations, establishing connections, making selections between different information options, performing evaluations related to data, interacting with sensors coupled to the communication device 400 to perform measurement operations, converting information from one format to another (e.g., between different protocols such as .wmv to .avi, etc.), and so on. For example, the logic configured to process information 410 may include logic configured to detect a missing frame in a first stream and logic configured to attempt to replace the missing frame in the first stream with a corresponding frame from a second stream. The processor included in the logic configured to process information 410 can correspond to a general purpose processor, a digital signal processor (DSP), an ASIC, a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The logic configured to process information 410 can also include software that, when executed, permits the associated hardware of the logic configured to process information 410 to perform its processing function(s). However, the logic configured to process information 410 does not correspond to software alone, and the logic configured to process information 410 relies at least in part upon hardware to achieve its functionality.

Referring to FIG. 4, the communication device 400 further includes logic configured to store information 415. In an example, the logic configured to store information 415 can include at least a non-transitory memory and associated hardware (e.g., a memory controller, etc.). For example, the non-transitory memory included in the logic configured to store information 415 can correspond to RAM, flash memory, ROM, erasable programmable ROM (EPROM), EEPROM, registers, hard disk, a removable disk, a CD-ROM, or any other form of storage medium known in the art. The logic configured to store information 415 can also include software that, when executed, permits the associated hardware of the logic configured to store information 415 to perform its storage function(s). However, the logic configured to store information 415 does not correspond to software alone, and the logic configured to store information 415 relies at least in part upon hardware to achieve its functionality.

Referring to FIG. 4, the communication device 400 further optionally includes logic configured to present information 420. In an example, the logic configured to present information 420 can include at least an output device and associated hardware. For example, the output device can include a video output device (e.g., a display screen, a port that can carry video information such as USB, HDMI, etc.), an audio output device (e.g., speakers, a port that can carry audio information such as a microphone jack, USB, HDMI, etc.), a vibration device and/or any other device by which information can be formatted for output or actually outputted by a user or operator of the communication device 400. For example, if the communication device 400 corresponds to UE 300A or UE 300B as shown in FIG. 3, the logic configured to present information 420 can include the display 310A of UE 300A or the touchscreen display 305B of UE 300B. In a further example, the logic configured to present information 420 can be omitted for certain communication devices, such as network communication devices that do not have a local user (e.g., network switches or routers, remote servers, etc.). The logic configured to present information 420 can also include software that, when executed, permits the associated hardware of the logic configured to present information 420 to perform its presentation function(s). However, the logic configured to present information 420 does not correspond to software alone, and the logic configured to present information 420 relies at least in part upon hardware to achieve its functionality.

Referring to FIG. 4, the communication device 400 further optionally includes logic configured to receive local user input 425. In an example, the logic configured to receive local user input 425 can include at least a user input device and associated hardware. For example, the user input device can include buttons, a touchscreen display, a keyboard, a camera, an audio input device (e.g., a microphone or a port that can carry audio information such as a microphone jack, etc.), and/or any other device by which information can be received from a user or operator of the communication device 400. For example, if the communication device 400 corresponds to UE 300A or UE 300B as shown in FIG. 3, the logic configured to receive local user input 425 can include the keypad 320A, any of the buttons 315A or 310B through 325B, the touchscreen display 305B, etc. In a further example, the logic configured to receive local user input 425 can be omitted for certain communication devices, such as network communication devices that do not have a local user (e.g., network switches or routers, remote servers, etc.). The logic configured to receive local user input 425 can also include software that, when executed, permits the associated hardware of the logic configured to receive local user input 425 to perform its input reception function(s). However, the logic configured to receive local user input 425 does not correspond to software alone, and the logic configured to receive local user input 425 relies at least in part upon hardware to achieve its functionality.

Referring to FIG. 4, while the configured logics of 405 through 425 are shown as separate or distinct blocks in FIG. 4, it will be appreciated that the hardware and/or software by which the respective configured logic performs its functionality can overlap in part. For example, any software used to facilitate the functionality of the configured logics of 405 through 425 can be stored in the non-transitory memory associated with the logic configured to store information 415, such that the configured logics of 405 through 425 each performs their functionality (i.e., in this case, software execution) based in part upon the operation of software stored by the logic configured to store information 415. Likewise, hardware that is directly associated with one of the configured logics can be borrowed or used by other configured logics from time to time. For example, the processor of the logic configured to process information 410 can format data into an appropriate format before being transmitted by the logic configured to receive and/or transmit information 405, such that the logic configured to receive and/or transmit information 405 performs its functionality (i.e., in this case, transmission of data) based in part upon the operation of hardware (i.e., the processor) associated with the logic configured to process information 410.

Generally, unless stated otherwise explicitly, the phrase "logic configured to" as used throughout this disclosure is intended to invoke an embodiment that is at least partially implemented with hardware, and is not intended to map to software-only implementations that are independent of hardware. Also, it will be appreciated that the configured logic or "logic configured to" in the various blocks are not limited to specific logic gates or elements, but generally refer to the ability to perform the functionality described herein (either via hardware or a combination of hardware and software). Thus, the configured logics or "logic configured to" as illustrated in the various blocks are not necessarily implemented as logic gates or logic elements despite sharing the word "logic." Other interactions or cooperation between the logic in the various blocks will become clear to one of ordinary skill in the art from a review of the embodiments described below in more detail.

Circuit switching is a telecommunications network methodology in which two network nodes establish a dedicated communications channel (circuit) through the network before they can communicate with each other. The circuit guarantees the full bandwidth of the channel and remains connected for the duration of the call. The circuit functions as if the nodes were physically connected by an electrical circuit.

Circuit switching is commonly used for connecting voice calls. During a circuit-switched (CS) voice call, a certain percentage of frames may be dropped or lost (called "frame erasure"). Carriers may intentionally drop approximately 1% or less of the frames to reduce the amount of power necessary to transmit the call. Frames may also be lost due to interference. A low frame erasure rate (FER), e.g. 1% or less, during a CS call is typically not noticeable. A higher FER, such as 5-10%, however, is noticeable.

Accordingly, the disclosure provides a VoIP-as-backup mode to compensate for a higher FER in a CS call. When the FER for the CS call rises above a certain threshold, typically between 1% and 5%, the originator device can setup a simultaneous VoIP stream (if a packet-switched network is available) for the call. After synchronizing the CS call stream with the VoIP call stream, the receiver device can replace missing frames in the CS stream with the corresponding frames from the VoIP stream (if received).

Rather than using an FER threshold to determine when to replace missing frames in the CS stream with frames from the VoIP stream, an aspect can use "burst error" detection and reporting. A "burst error" is a more extreme FER over a short period of time, for example, a 20% FER within a two second span. In this case, the overall FER may stay at or below 1%, but the occasional "burst error" may cause a noticeable artifact in the stream. Accordingly, the missing frames in the CS stream during this burst could be replaced with frames from the VoIP stream. In yet another aspect, the user may set the FER threshold at an even lower level than the 1% to 5% to increase the robustness of the call.

For CS calls, frames are transmitted at the physical layer, meaning there is no higher layer to control how the frames are played. Thus, frames are played as they are received. For VoIP calls, however, the RTP layer (via the RTP header) controls the order in which the frames are played by assigning a timestamp and a sequence number to each packet. Accordingly, to replace missing frames in the CS stream with the corresponding frames from the VoIP stream, the receiving device must determine how to synchronize the CS stream with the VoIP stream.

For a given CS frame and VoIP packet containing the same voice data, other information that is the same between the CS frame and the VoIP packet is the frame rate and frame length, and possibly the capacity operating point (COP) mode. It is resource intensive to compare the CS stream to the VoIP stream on a bit-by-bit basis. Accordingly, to synchronize the CS stream and the VoIP stream, the receiver device can choose a series of frames in the CS frame stream and search the VoIP stream for a series of frames with the matching series of frame rates or frame lengths. That is, the receiver can match frame rate/length patterns in the CS stream to the same frame rate/length pattern in the VoIP stream.

Once the receiver has identified a matching series of frames, the receiver can compare the data within one or more frames of each of the matching series of frames to verify that the two series actually match and that the frame rate/length series match was not simply a coincidence. If the data matches, the receiver can compute a time offset between the CS stream and the VoIP stream, and use that time offset on each inbound packet to match the CS frame playout time slices with incoming VoIP RTP packet sequence numbers.

Whenever there is an erasure (i.e., a dropped frame) in the CS stream, the receiver can replace it with a corresponding frame from the VoIP stream, thereby ensuring that call quality does not suffer. If the CS stream returns to its typical FER and sustains it for a certain period, the VoIP stream can be dropped, as it is no longer necessary.

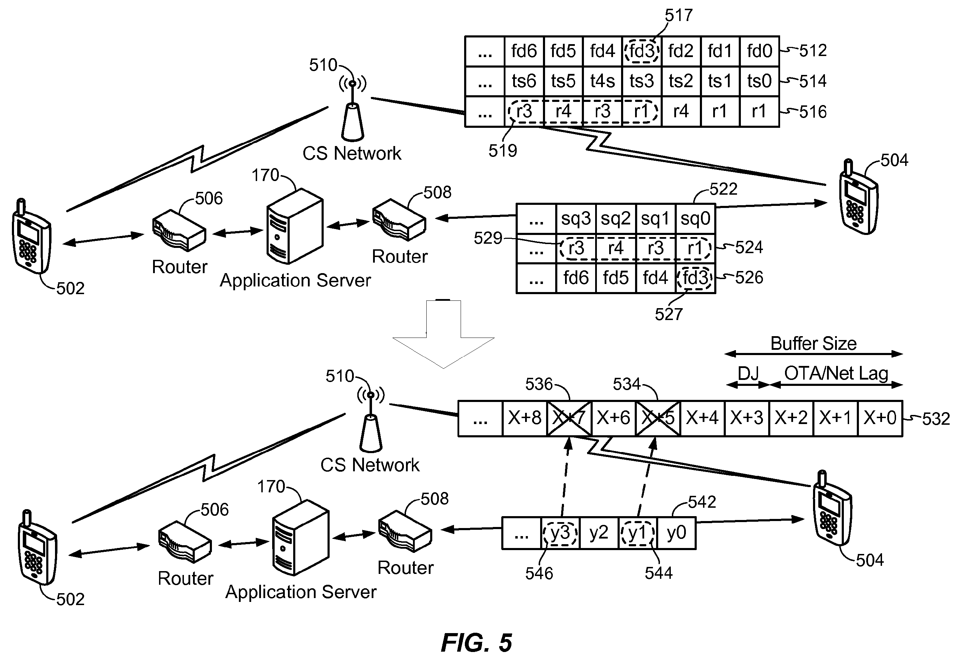

FIG. 5 illustrates an exemplary network according to an aspect of the disclosure. In FIG. 5, an originator UE 502 is in communication with a receiver UE 504 over a CS network 510. An exemplary section of the CS stream comprises a series of frame data (fd) 512, a corresponding series of timestamps (ts) 514, and a corresponding series of frame rates (r) 516. Each column of the depicted CS stream section corresponds to a CS frame. The timestamp is the time at which the frame is received at UE 504.

UE 502 is also transmitting a VoIP stream to UE 504 through router 506, application server 170, and router 508. An exemplary section of the VoIP stream comprises a series of sequence numbers (sq) 522, a corresponding series of frame rates (r) 524, and a corresponding series of frame data (fd) 526. Each column of the depicted VoIP stream section corresponds to a VoIP packet. A VoIP packet may contain multiple frames, in which case the receiver UE 504 can assign a sub-index value to each frame and use that value to identify frames, rather than the sequence number of the VoIP packet.

As shown in FIG. 5, the depicted CS stream section includes a pattern of frame rates 519 that matches a pattern of frame rates 529 of the VoIP stream. At least one frame data 517 of the pattern of frame rates 519 in the CS stream should be the same as the corresponding frame data 527 of the pattern of frame rates 529 in the VoIP stream. The receiving UE 504 can identify the matching patterns of frame rates 519 and 529 and determine whether at least one of the corresponding frame data of each stream, here frame data 517 and 527, are the same. If they are, then UE 504 knows that the CS frame with timestamp ts3 corresponds to the VoIP packet with sequence number sq0. The UE 504 can then determine the time offset between the two streams using the expected arrival time for the frames in the CS stream and the sequence number for the VoIP stream.

Once the UE 504 determines the time offset, it can pause or slow down the CS stream to buffer enough packets or frames of the VoIP stream such that the UE 504 can use the VoIP stream to fill in erasures in the CS stream. For example, the CS stream will be approximately 300ms, or 15 frames, ahead of the VoIP stream. Alternatively, the UE 504 can wait until the next significant outage of frames in the CS stream to buffer the VoIP stream to allow the VoIP stream to catch up with the CS stream.

FIG. 5 also illustrates UE 502 transmitting a stream of CS frames 532 and a stream of VoIP frames 542 to UE 504 after UE 504 has synchronized the streams. UE 504 buffers the first four frames of the CS stream 532 to account for the over the air (OTA) and network lag between the CS stream 532 and the VoIP stream 542. The UE 504 determines this lag time, or time offset, by determining the period of time between the time that the frame of the CS stream is received and the time that the corresponding frame of the VoIP stream is received. Alternatively, the UE 504 can determine the time lag by comparing the time that the frame of the CS stream is received to the time that the corresponding frame of the VoIP stream is transmitted. The number of frames the UE 504 buffers also accounts for the time required by the dejitter (DJ) buffer for reordering out-of-order VoIP packets.

In the example of FIG. 5, CS frames 534 and 536 are dropped. Since UE 504 has already synchronized the CS stream 532 to the VoIP stream 542, UE 504 knows that CS frames 534 and 536 correspond to VoIP packets 544 and 546, respectively. As shown, UE 504 has VoIP packets 544 and 546 buffered. Accordingly, UE 504 plays out VoIP packets 544 and 546 when CS frames 534 and 536 would otherwise be played. In this way, there is no gap in the CS stream.

It should be noted that frame erasures are different than discontinuous transmission (DTX). DTX is a lack of transmission, where a periodic session identifier (SID) frame is received, while frame erasures are dropped frames that the sender transmitted but the receiver did not receive. Either way, the result is that the receiver does not have a frame in the queue to playout. There is little value in replacing DTX frames, however, as they provide "comfort noise" during the call. However, there is value in refraining from pausing the call stream to replace frames when in a known DTX stretch.

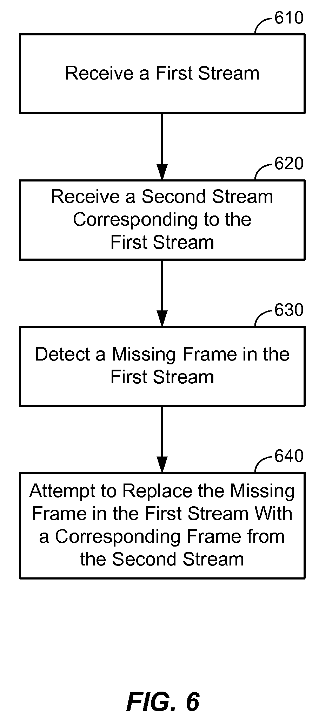

FIG. 6 illustrates an exemplary flow for selectively patching frame erasures in a first stream. The flow illustrated in FIG. 6 may be performed by a UE receiving the first stream, such as UE 504 in FIG. 5. At 610, the UE receives the first stream. At 620, the UE receives a second stream corresponding to the first stream. At 630, the UE detects a missing frame in the first stream. At 640, the UE attempts to replace the missing frame in the first stream with a corresponding frame from the second stream.

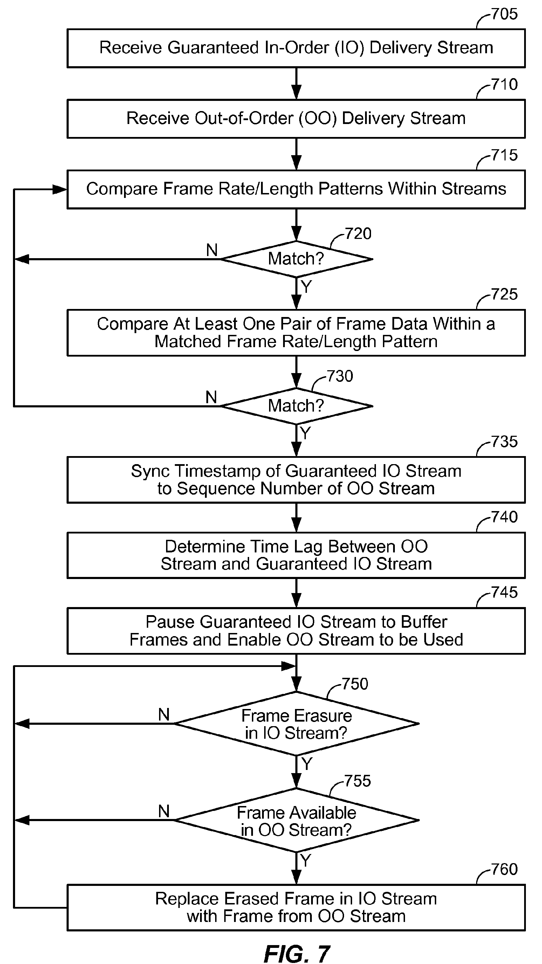

FIG. 7 illustrates an exemplary flow for selectively patching frame erasures in a first stream. The flow illustrated in FIG. 7 may be performed by a UE receiving the first stream, such as UE 504 in FIG. 5. The flow illustrated in FIG. 7 shows the flow illustrated in FIG. 6 in greater depth.

At 705, the receiver UE receives a first stream, as in 610 of FIG. 6, such as a guaranteed in-order delivery stream. A guaranteed in-order delivery stream may be any stream in which the frames or packets of the stream are guaranteed to be delivered in-order, such as a CS stream. However, the guaranteed in-order stream may be a VoIP stream with a reduced RTP header, such as an RTP header that lacks at least the sequence number and/or the timestamp. The network would have to guarantee delivery of such a VoIP stream in-order because there would be no sequence number or timestamp to use to reorder, i.e. dejitter, the VoIP packets after delivery.

At 710, the UE receives second stream corresponding to the first stream, as in 620 of FIG. 6, such as an out-of-order delivery stream. An out-of-order delivery stream is an unreliable stream with non-guaranteed order, i.e., there is no guarantee of delivery, ordering, or duplicate protection. A packet-switched stream, such as a VoIP packet stream, is an example of an out-of-order delivery stream. The out-of-order stream can be received in response to the FER of the guaranteed in-order stream being higher than a threshold. The threshold may be a 1% to 5% FER. The originator UE can initiate the out-of-order stream upon detecting that the FER is above the threshold, or the receiving UE can request that the originator UE initiate the out-of-order stream upon detecting that the FER is above the threshold. Alternatively, an application server, such as application server 170 in FIG. 1, can communicate with the CS network or the receiver UE to determine the FER, and if it is above the threshold, the application server can instruct the originator UE to initiate the out-of-order stream. In order to establish the out-of-order stream, both the originator UE and receiver UE must have access to a packet-switched network, such as a Wi-Fi network.

At 715, the receiver UE compares the frame rates or frame lengths of a series of frames in the guaranteed in-order stream to the frame rates or frame lengths of a series of frames in the out-of-order stream. In the example of FIG. 5, the UE 504 compared a series of four frames. However, the receiver UE can compare a series of more or fewer frames. Further, the frames do not need to be in sequence, but could be any pattern, such as every other frame, or the like.

At 720, the receiver UE determines whether or not the frame rates/lengths of the series of frames in the guaranteed in-order stream match the frame rates/lengths of the series of frames in the out-of-order stream. If they do not, the flow returns to 715 and the UE selects a different series of frames in the guaranteed in-order and/or out-of-order streams.

If they do, however, then at 725, the receiver UE compares the frame data in at least one frame of the identified series of frame rates/lengths of the guaranteed in-order stream to the frame data of the corresponding frame of the matching series of frame rates/lengths of the out-of-order stream. The receiver UE can alternatively compare the frame data for multiple frames within the matching series of frames. The receiver UE makes a bit-by-bit comparison of the frame data.

At 730, the receiver UE determines whether or not the frame data of the at least one frame in the series of frames of the guaranteed in-order stream is the same as the frame data of the corresponding frame in the series of frames of the out-of-order stream. If it is not, then the flow returns to 715 and the UE selects a different series of frames in the guaranteed in-order and/or out-of-order streams.

If the frame data is the same, however, then at 735, the receiver UE corresponds the timestamp of the guaranteed in-order frame to the sequence number of the out-of-order frame. The timestamps for the guaranteed in-order stream represent the time at which the guaranteed in-order frame was received. From this point, the next frame in the guaranteed in-order stream will correspond to the next frame in the out-of-order stream, and so on.

A packet in the out-of-order stream may include multiple frames. Accordingly, the receiver UE may not be able to simply match the timestamp of a guaranteed in-order frame to the sequence number of an out-of-order packet. Rather, the receiver UE may need to assign a sub-index number to each frame within a packet and match the sub-index number to the timestamp. For example, given a packet with a sequence number of "4" and containing four frames, the frames could be assigned sub-index values of "4-0," "4-1," "4-2," and "4-3," for example.

After finding a matching series of frames in the guaranteed in-order stream and the out-of-order stream, the receiver UE does not need to look for other matching series' of frames. However, the UE can periodically repeat 715 to 735 to ensure that the synchronization determined earlier is still correct. Alternatively, the receiver UE can continuously monitor the guaranteed in-order and out-of-order streams.

A given chunk of data for an out-of-order stream will almost always be delivered after the same chunk of data is delivered in a guaranteed in-order stream because of the additional overhead required in transmitting an out-of-order stream. Accordingly, at 740, the receiver UE can determine the lag time between the out-of-order stream and the guaranteed in-order stream. This lag time is the OTA and network lag time inherent in transmitting the out-of-order stream. An out-of-order packet includes a timestamp indicating the time at which the originator UE generated/transmitted the packet. The receiver UE can determine the lag time by comparing this timestamp to the time at which the packet is received. Alternatively, the receiver UE can determine the lag time by determining the period of time between the time that the frame of the guaranteed in-order stream is received and the time that the corresponding frame of the out-of-order stream is received. In yet another alternative, the receiver UE can determine the time lag by comparing the time that the frame of the guaranteed in-order stream is received to the time that the corresponding frame of the out-of-order stream is transmitted.

At 745, once the receiver UE determines the lag time, it can pause or slow down the guaranteed in-order stream to buffer enough packets or frames of the out-of-order stream that the UE can use the out-of-order stream to fill in erasures in the guaranteed in-order stream. For example, a CS stream may be approximately 300ms, or 15 frames, ahead of the VoIP stream. Alternatively, the receiver UE can wait until the next significant outage of frames in the guaranteed in-order stream to buffer the out-of-order stream to allow the out-of-order stream to catch up with the guaranteed in-order stream.

The receiver UE can also delay the in-order stream to account for the time the out-of-order stream is delayed in the dejitter buffer. The number of frames to buffer in the dejitter buffer can be determined using an adaptive watermark. If the receiver UE does not have an out-of-order frame in time to fill an erasure in the guaranteed in-order stream, the receiver UE can increase the dejitter buffer size. If the receiver UE receives the out-of-order frame well ahead of where it would be needed in the in-order stream, the receiver UE can decrease the dejitter buffer size. Once the guaranteed in-order stream has passed the point in time of a buffered out-of-order frame, the out-of-order frame can be removed from the buffer.

At 750, the receiver UE determines whether or not there has been a frame erasure in the guaranteed in-order stream. If there has not, the receiver UE waits until there is. If there is an erasure (which corresponds to 630 of FIG. 6), however, then at 755, the receiver UE determines whether or not a corresponding frame is available from the out-of-order stream. If one is not, the flow waits for another frame erasure. If there is an available frame, however, then at 760, the receiver UE replaces the dropped frame in the guaranteed in-order stream with the corresponding frame from the out-of-order stream. Blocks 755 and 760 correspond to 640 of FIG. 6. The flow then continues to monitor the guaranteed in-order stream for another frame erasure.

As an alternative, block 750 can be skipped and the flow can proceed from 745 to 755 and 760, where data received in the out-of-order stream, if available, is copied into the in-order stream. This means that the frames already received in the in-order stream are overwritten with the corresponding frames from the out-of-order stream regardless of whether there is a frame erasure in the in-order stream. The advantage of this alternative is that the logic to implement it may be simpler.

If the FER of the guaranteed in-order stream drops below the FER threshold and sustains it for a certain period of time, the receiver UE can drop the out-of-order stream, as it is no longer necessary. Alternatively, the originator and receiver UEs can maintain the out-of-order stream for the remainder of the call. If the receiver UE does drop the out-of-order stream, it can also speed up the guaranteed in-order stream so that it is no longer delayed to match the out-of-order stream.

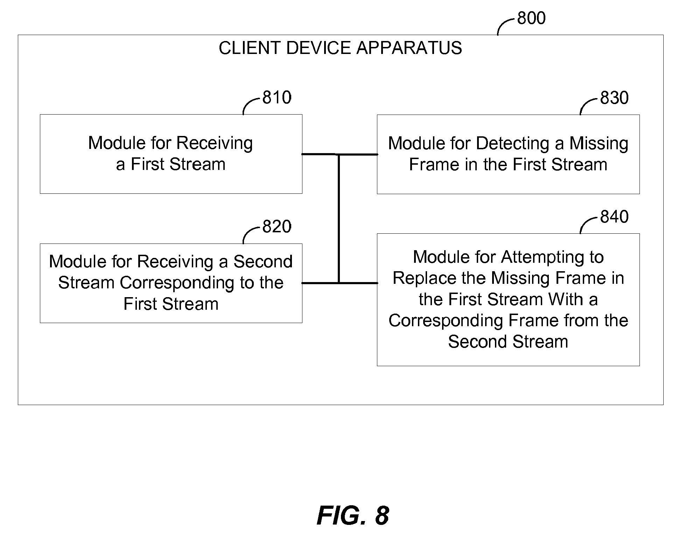

FIG. 8 illustrates an example client device apparatus 800 for selectively patching frame erasures in a first stream. A module for receiving 810 may correspond at least in some aspects to, for example, a communication device (e.g., a transmitter/transceiver) as discussed herein. A module for receiving 820 may correspond at least in some aspects to, for example, a communication device (e.g., a receiver/transceiver) as discussed herein. A module for detecting may correspond at least in some aspects to, for example, a processing device (e.g., a microprocessor, ASIC, etc.) as discussed herein. A module for attempting 840 may correspond at least in some aspects to, for example, a processing device (e.g., a microprocessor, ASIC, etc.) as discussed herein.

The functionality of the modules of FIG. 8 may be implemented in various ways consistent with the teachings herein. In some aspects, the functionality of these modules may be implemented as one or more electrical components. In some aspects, the functionality of these blocks may be implemented as a processing system including one or more processor components. In some aspects, the functionality of these modules may be implemented using, for example, at least a portion of one or more integrated circuits (e.g., an ASIC). As discussed herein, an integrated circuit may include a processor, software, other related components, or some combination thereof. Thus, the functionality of different modules may be implemented, for example, as different subsets of an integrated circuit, as different subsets of a set of software modules, or a combination thereof. Also, it should be appreciated that a given subset (e.g., of an integrated circuit and/or of a set of software modules) may provide at least a portion of the functionality for more than one module.

In addition, the components and functions represented by FIG. 8 as well as other components and functions described herein, may be implemented using any suitable means. Such means also may be implemented, at least in part, using corresponding structure as taught herein. For example, the components described above in conjunction with the "module for" components of FIG. 8 also may correspond to similarly designated "means for" functionality. Thus, in some aspects one or more of such means may be implemented using one or more of processor components, integrated circuits, or other suitable structure as taught herein.

In some aspects, an apparatus or any component of an apparatus may be configured to (or operable to or adapted to) provide functionality as taught herein. This may be achieved, for example: by manufacturing (e.g., fabricating) the apparatus or component so that it will provide the functionality; by programming the apparatus or component so that it will provide the functionality; or through the use of some other suitable implementation technique. As one example, an integrated circuit may be fabricated to provide the requisite functionality. As another example, an integrated circuit may be fabricated to support the requisite functionality and then configured (e.g., via programming) to provide the requisite functionality. As yet another example, a processor circuit may execute code to provide the requisite functionality.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM, flash memory, ROM, EPROM, EEPROM, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the invention, it should be noted that various changes and modifications could be made herein without departing from the scope of the invention as defined by the appended claims. Furthermore, although elements of the invention may be described or claimed in the singular, the plural is contemplated unless limitation to the singular is explicitly stated.

## Claims

1. A method for selectively patching frame erasures in a first stream, comprising:
receiving (610, 705) the first stream;
receiving (620, 710), in response to a frame erasure rate of the first stream being greater than or equal to a threshold, a second stream corresponding to the first stream,
synchronizing (735) the first stream and the second stream based on a comparison of frame information for a plurality of frames in the first stream and a plurality of frames in the second stream; wherein the plurality of frames in the first stream match the plurality of frames in the second stream;
detecting (630, 750) a missing frame in the first stream; and
attempting (640, 755, 760) to replace the missing frame in the first stream with a corresponding frame from the second stream.

2. The method of claim 1, wherein the synchronizing comprises:
determining (715, 720), based on the comparison, whether frame information for the plurality of frames in the first stream match frame information for the plurality of frames in the second stream;
based on the frame information for the plurality of frames in the first stream matching the frame information for the plurality of frames in the second stream, determining (725, 730) whether frame data for at least one frame in the plurality of frames in the first stream match frame data for a frame in the plurality of frames in the second stream; and
based on the frame data for the at least one frame in the plurality of frames in the first stream matching the frame data for the frame in the plurality of frames in the second stream, synchronizing (735) a timestamp of a frame of the first stream to an identifier of a frame of the second stream.

3. The method of claim 2, wherein the frame information comprises one or more of a frame rate or a frame length for each of the plurality of frames.

4. The method of claim 2, wherein the identifier identifies one of a plurality of frames that correspond to a sequence number of the second stream, or
identifies one of a plurality of frames that correspond to a timestamp of the second stream.

5. The method of claim 2, wherein the plurality of frames in the second stream are transmitted in one or more packets.

6. The method of claim 2, further comprising:
based on the frame data for the at least one frame in the plurality of frames in the first stream not matching the frame data for the frame in the plurality of frames in the second stream, determining (730) whether frame information for a second plurality of frames in the first stream match frame information for a second plurality of frames in the second stream.

7. The method of any previous claim, further comprising:
determining (740) a time offset between the time that a frame of the first stream is received and a time that a corresponding frame of the second stream is received; and
pausing (745) the first stream and buffering (745) the second stream for a period of time greater than or equal to the time offset.

8. The method of any previous claim, wherein the first stream comprises a guaranteed in-order delivery stream, and/or
wherein the second stream comprises an out-of-order delivery stream.

9. The method of any previous claim, further comprising:
based on the frame erasure rate being less than the threshold for a given period of time, ceasing reception of the second stream.

10. The method of any previous claim, further comprising:
increasing the playout rate of the first stream for a period of time equal to a time offset between the time that a frame of the first stream is received and a time that a corresponding frame of the second stream is received.

11. The method of any previous claim, further comprising:
determining whether a sequence number of a buffered frame of the second stream is older than a timestamp of a frame of the first stream; and
based on the sequence number of the buffered frame of the second stream being older than the timestamp of the frame of the first stream, deleting the buffered frame.

12. The method of any previous claim, wherein the attempting comprises:
determining (755) whether there is a frame in the second stream corresponding to the missing frame; and
based on determining that there is a frame in the second stream corresponding to the missing frame, replacing (760) the missing frame in the first stream with the corresponding frame from the second stream.

13. An apparatus for selectively patching frame erasures in a first stream, comprising:
means for receiving the first stream;
means for receiving, in response to a frame erasure rate of the first stream being greater than or equal to a threshold, a second stream corresponding to the first stream;
means for synchronizing the first stream and the second stream based on comparison of frame information for a plurality of frames in the first stream and a plurality of frames in the second stream, where in the plurality of frames in the first stream matching the plurality of frames in the second stream;
means for detecting a missing frame in the first stream; and
means for attempting to replace the missing frame in the first stream with a corresponding frame from the second stream.

14. A non-transitory computer-readable medium comprising program code adapted to carry out the method of claims 1 to 12.

## Patentansprüche

1. Ein Verfahren für ein wahlweises Patching von Rahmenlöschungen in einem ersten Strom, aufweisend:
Empfangen (610, 705) des ersten Stroms,
Empfangen (620, 710), in Antwort darauf, dass eine Rahmenlöschrate des ersten Stroms größer oder gleich einem Schwellwert ist, eines zweiten Stroms in Entsprechung zu dem ersten Strom,
Synchronisieren (735) des ersten Stroms und des zweiten Stroms basierend auf einem Vergleich von Rahmeninformationen für eine Vielzahl von Rahmen in dem ersten Strom und einer Vielzahl von Rahmen in dem zweiten Strom, wobei die Vielzahl von Rahmen in dem ersten Strom der Vielzahl von Rahmen in dem zweiten Strom entspricht,
Erfassen (630, 750) eines fehlenden Rahmens in dem ersten Strom,
und
Versuchen (640, 755, 760), den fehlenden Rahmen in dem ersten Strom durch einen entsprechenden Rahmen aus dem zweiten Strom zu ersetzen.

2. Verfahren nach Anspruch 1, wobei das Synchronisieren aufweist:
Bestimmen (715, 720), basierend auf dem Vergleich, ob Rahmeninformationen für die Vielzahl von Rahmen in dem ersten Strom Rahmeninformationen für die Vielzahl von Rahmen in dem zweiten Strom entsprechen,
basierend darauf, dass die Rahmeninformationen für die Vielzahl von Rahmen in dem ersten Strom den Rahmeninformationen für die Vielzahl von Rahmen in dem zweiten Strom entsprechen, Bestimmen (725, 730), ob Rahmendaten für wenigstens einen Rahmen in der Vielzahl von Rahmen in dem ersten Strom Rahmendaten für einen Rahmen in der Vielzahl von Rahmen in dem zweiten Strom entsprechen, und
basierend darauf, dass die Rahmendaten für den wenigstens einen Rahmen in der Vielzahl von Rahmen in dem ersten Strom den Rahmendaten für den Rahmen in der Vielzahl von Rahmen in dem zweiten Strom entsprechen, Synchronisieren (735) eines Zeitstempels eines Rahmens des ersten Stroms mit einer Kennzeichnung eines Rahmens des zweiten Stroms.

3. Verfahren nach Anspruch 2, wobei die Rahmeninformationen eine Rahmenrate und/oder eine Rahmenlänge für jeden aus der Vielzahl von Rahmen aufweisen.

4. Verfahren nach Anspruch 2, wobei die Kennzeichnung einen aus einer Vielzahl von Rahmen, die einer Sequenznummer des zweiten Stroms entsprechen, identifiziert, oder
einen aus einer Vielzahl von Rahmen, die einem Zeitstempel des zweiten Stroms entsprechen, identifiziert.

5. Verfahren nach Anspruch 2, wobei die Vielzahl von Rahmen in dem zweiten Strom in einem oder mehreren Paketen gesendet werden.

6. Verfahren nach Anspruch 2, das weiterhin aufweist:
basierend darauf, dass die Rahmendaten für den wenigstens einen Rahmen in der Vielzahl von Rahmen in dem ersten Strom nicht den Rahmendaten für den Rahmen in der Vielzahl von Rahmen in dem zweiten Strom entsprechen, Bestimmen (730), ob Rahmeninformationen für eine zweite Vielzahl von Rahmen in dem ersten Strom Rahmeninformationen für eine zweite Vielzahl von Rahmen in dem zweiten Strom entsprechen.

7. Verfahren nach einem der vorstehenden Ansprüche, das weiterhin aufweist:
Bestimmen (740) eines Zeitversatzes zwischen der Zeit, zu der ein Rahmen des ersten Stroms empfangen wird, und einer Zeit, zu der ein entsprechender Rahmen des zweiten Stroms empfangen wird, und
Pausieren (745) des ersten Stroms und Puffern (745) des zweiten Stroms für eine Zeitperiode, die größer oder gleich dem Zeitversatz ist.

8. Verfahren nach einem der vorstehenden Ansprüche, wobei der erste Strom einen garantierten In-Reihenfolge-Zustellungsstrom aufweist, und/oder
wobei der zweite Strom einen Außer-Reihenfolge-Zustellungsstrom aufweist.

9. Verfahren nach einem der vorstehenden Ansprüche, das weiterhin aufweist:
basierend darauf, dass die Rahmenlöschrate kleiner als der Schwellwert für eine gegebene Zeitperiode ist, Beenden des Empfangs des zweiten Stroms.

10. Verfahren nach einem der vorstehenden Ansprüche, das weiterhin aufweist:
Vergrößern der Playout-Rate des ersten Stroms für eine Zeitperiode gleich einem Zeitversatz zwischen der Zeit, zu der ein Rahmen des ersten Stroms empfangen wird, und einer Zeit, zu der ein entsprechender Rahmen des zweiten Stroms empfangen wird.

11. Verfahren nach einem der vorstehenden Ansprüche, das weiterhin aufweist:
Bestimmen, ob eine Sequenznummer eines gepufferten Rahmens des zweiten Stroms älter als ein Zeitstempel eines Rahmens des ersten Stroms ist, und
basierend darauf, dass die Sequenznummer des gepufferten Rahmens des zweiten Stroms älter als der Zeitstempel des Rahmens des ersten Stroms ist, Löschen des gepufferten Rahmens.

12. Verfahren nach einem der vorstehenden Ansprüche, wobei das Versuchen aufweist:
Bestimmen (755), ob ein Rahmen in dem zweiten Strom vorhanden ist, der dem fehlenden Rahmen entspricht, und
basierend auf dem Bestimmen, dass ein Rahmen in dem zweiten Strom vorhanden ist, der dem fehlenden Rahmen entspricht, Ersetzen (760) des fehlenden Rahmens in dem ersten Strom durch den entsprechenden Rahmen aus dem zweiten Strom.

13. Eine Vorrichtung für das wahlweise Patching von Rahmenlöschungen in einem ersten Strom, aufweisend:
Mittel zum Empfangen des ersten Stroms.
Mittel zum Empfangen, in Antwort darauf, dass eine Rahmenlöschrate des ersten Stroms größer oder gleich einem Schwellwert ist, eines zweiten Stroms in Entsprechung zu dem ersten Strom,
Mittel zum Synchronisieren des ersten Stroms und des zweiten Stroms basierend auf einem Vergleich von Rahmeninformationen für eine Vielzahl von Rahmen in dem ersten Strom und eine Vielzahl von Rahmen in dem zweiten Strom, wobei die Vielzahl von Rahmen in dem ersten Strom der Vielzahl von Rahmen in dem zweiten Strom entspricht,
Mittel zum Erfassen eines fehlenden Rahmens in dem ersten Strom,
und
Mittel zum Versuchen, den fehlenden Rahmen in dem ersten Strom durch einen entsprechenden Rahmen aus dem zweiten Strom zu ersetzen.

14. Ein nicht-transitorisches, computerlesbares Medium mit einem Programmcode, der ausgebildet ist, um das Verfahren von Anspruch 1 bis 12 durchzuführen.

## Revendications

1. Procédé de rapiéçage sélectif d'effacements de trames dans un premier flux, comprenant les étapes ci-dessous consistant à :
recevoir (610, 705) le premier flux ;
recevoir (620, 710), en réponse au fait qu'un taux d'effacement de trames du premier flux est supérieur ou égal à un seuil, un second flux correspondant au premier flux ;
synchroniser (735) le premier flux et le second flux sur la base d'une comparaison d'informations de trames pour une pluralité de trames dans le premier flux et une pluralité de trames dans le second flux ; dans lequel la pluralité de trames dans le premier flux correspond à la pluralité de trames dans le second flux ;
détecter (630, 750) une trame manquante dans le premier flux ; et
tenter (640, 755, 760) de remplacer la trame manquante dans le premier flux par une trame correspondante provenant du second flux.

2. Procédé selon la revendication 1, dans lequel l'étape de synchronisation comprend les étapes ci-dessous consistant à :
déterminer (715, 720), sur la base de la comparaison, si des informations de trames pour la pluralité de trames dans le premier flux correspondent à des informations de trames pour la pluralité de trames dans le second flux ;
sur la base du fait que les informations de trames pour la pluralité de trames dans le premier flux correspondent aux informations de trames pour la pluralité de trames dans le second flux, déterminer (725, 730) si des données de trames pour au moins une trame dans la pluralité de trames dans le premier flux correspondent à des données de trames pour une trame dans la pluralité de trames dans le second flux ; et
sur la base du fait que les données de trames pour ladite au moins une trame dans la pluralité de trames dans le premier flux correspondent aux données de trames pour la trame dans la pluralité de trames dans le second flux, synchroniser (735) une estampille temporelle d'une trame du premier flux avec un identifiant d'une trame du second flux.

3. Procédé selon la revendication 2, dans lequel les informations de trames comportent une ou plusieurs caractéristiques parmi un débit de trame ou une longueur de trame pour chaque trame de la pluralité de trames.

4. Procédé selon la revendication 2, dans lequel l'identifiant identifie l'une d'une pluralité de trames correspondant à un numéro de séquence du second flux ; ou
dans lequel l'identifiant identifie l'une d'une pluralité de trames correspondant à une estampille temporelle du second flux.

5. Procédé selon la revendication 2, dans lequel la pluralité de trames dans le second flux est transmise dans un ou plusieurs paquets.

6. Procédé selon la revendication 2, comprenant en outre les étapes ci-dessous consistant à :
sur la base du fait que les données de trames pour ladite au moins une trame dans la pluralité de trames dans le premier flux ne correspondent pas aux données de trames pour la trame dans la pluralité de trames dans le second flux, déterminer (730) si des informations de trames pour une seconde pluralité de trames dans le premier flux correspondent à des informations de trames pour une seconde pluralité de trames dans le second flux.

7. Procédé selon l'une quelconque des revendications précédentes, comprenant en outre les étapes ci-dessous consistant à :
déterminer (740) un décalage de temps entre l'instant auquel une trame du premier flux est reçue et un instant auquel une trame correspondante du second flux est reçue ; et
interrompre momentanément (745) le premier flux, et mettre en mémoire tampon (745) le second flux pendant une période de temps supérieure ou égale au décalage de temps.

8. Procédé selon l'une quelconque des revendications précédentes, dans lequel le premier flux comporte un flux à distribution ordonnée garantie ; et/ou
dans lequel le second flux comporte un flux à distribution désordonnée.

9. Procédé selon l'une quelconque des revendications précédentes, comprenant en outre l'étape ci-dessous consistant à :
sur la base du fait que le taux d'effacement de trames est inférieur au seuil pour une période de temps donnée, mettre fin à la réception du second flux.

10. Procédé selon l'une quelconque des revendications précédentes, comprenant en outre l'étape ci-dessous consistant à :
augmenter le débit de diffusion du premier flux pour une période de temps égale à un décalage de temps entre l'instant auquel une trame du premier flux est reçue et un instant auquel une trame correspondante du second flux est reçue.

11. Procédé selon l'une quelconque des revendications précédentes, comprenant en outre les étapes ci-dessous consistant à :
déterminer si un numéro de séquence d'une trame mise en mémoire tampon du second flux est plus ancien que l'estampille temporelle d'une trame du premier flux ; et
sur la base du fait que le numéro de séquence de la trame mise en mémoire tampon du second flux est plus ancien que l'estampille temporelle de la trame du premier flux, supprimer la trame mise en mémoire tampon.

12. Procédé selon l'une quelconque des revendications précédentes, dans lequel l'étape de tentative comprend les étapes ci-dessous consistant à :
déterminer (755) s'il existe une trame dans le second flux correspondant à la trame manquante ; et
sur la base de la détermination selon laquelle il existe une trame dans le second flux correspondant à la trame manquante, remplacer (760) la trame manquante dans le premier flux par la trame correspondante provenant du second flux.

13. Appareil destiné à rapiécer de manière sélective des effacements de trames dans un premier flux, comprenant :
un moyen pour recevoir le premier flux ;
un moyen pour recevoir, en réponse au fait qu'un taux d'effacement de trames du premier flux est supérieur ou égal à un seuil, un second flux correspondant au premier flux ;
un moyen pour synchroniser le premier flux et le second flux sur la base d'une comparaison d'informations de trames pour une pluralité de trames dans le premier flux et une pluralité de trames dans le second flux ; dans lequel la pluralité de trames dans le premier flux correspond à la pluralité de trames dans le second flux ;
un moyen pour détecter une trame manquante dans le premier flux ; et
un moyen pour tenter de remplacer la trame manquante dans le premier flux par une trame correspondante provenant du second flux.

14. Support non transitoire lisible par ordinateur comprenant un code de programme apte à mettre en oeuvre le procédé selon les revendications 1 à 12.
